# FASCICULE DE BREVET EUROPEEN

(11) **EP 4 028 230 B1**
(45) Date de publication et mention de la délivrance du brevet: **25.10.2023**
(21) Numéro de dépôt: 20775918.4
(22) Date de dépôt: 02.09.2020
(51) Int. Cl.: B29B 11/16, B29L 31/08, F01D 5/14, F01D 5/28

(54) **PREFORME POUR AUBE COMPOSITE**
VORFORM FÜR EINE VERBUNDSCHAUFEL
PREFORM FOR A COMPOSITE BLADE

(30) Priorité: 10.09.2019 FR 1909949
(43) Date de publication de la demande: 20.07.2022
(73) Titulaire: SAFRAN AIRCRAFT ENGINES, 75015 Paris (FR)
(72) Inventeur: COURTIER, Vivien, Mickaël, 77550 MOISSY-CRAMAYEL (FR); MAYHEW, Dominique, Gerhardt, 77550 MOISSY-CRAMAYEL (FR); FABRE, Adrien, Jacques, Philippe, 77550 MOISSY-CRAMAYEL (FR); LAURENCEAU, Adrien, Louis, Nicolas, 77550 MOISSY-CRAMAYEL (FR)
(74) Mandataire: Cabinet Beau de Loménie
(86) Numéro de dépôt international: PCT/FR2020/051523
(87) Numéro de publication internationale: WO 2021/048484

(56) Documents cités:
- EP-A1- 1 077 126
- WO-A2-2015/099861
- DE-A1- 2 756 684
- FR-A1- 3 040 909

## Description

### Domaine Technique

Le présent exposé concerne une préforme fibreuse pour une aube composite ainsi qu'une aube composite formée au moyen d'une telle préforme, un rotor et une machine tournante comprenant une telle aube.

Une telle préforme peut être utilisée pour réaliser des aubes de grande envergure bénéficiant d'une masse réduite. De telles aubes peuvent être notamment des aubes d'hélice ou de soufflante d'un turboréacteur d'avion par exemple.

### Technique antérieure

Dans un turboréacteur à double flux, dans un turboréacteur à soufflante non carénée (couramment appelé open rotor), ou encore dans un turbopropulseur, la poussée et le rendement du moteur augmentent avec le diamètre de la soufflante ou de l'hélice. En conséquence, la tendance actuelle est d'augmenter autant que possible ce diamètre.

Toutefois, on comprend qu'une telle augmentation de diamètre du rotor entraîne mécaniquement une augmentation de la masse de la machine tournante, en raison bien entendu de l'accroissement de la taille des aubes, mais également de l'ensemble des structures mécaniques du rotor et, le cas échéant, des structures du stator destinées à retenir les aubes en cas d'avarie.

De plus, cette augmentation du diamètre du rotor entraîne d'importantes problématiques de tenue mécanique. En particulier, l'accroissement des envergures des aubes tend à abaisser les fréquences propres de ces aubes, ce qui nécessite d'augmenter sensiblement leur épaisseur afin de relever ces fréquences propres, augmentant encore la masse des aubes.

La transition technologique ayant mené au remplacement des anciennes aubes métalliques par des aubes composites a contribué à réduire la masse des rotors de turboréacteurs ; toutefois, compte tenu des exigences toujours plus strictes en matière de consommation notamment, il est souhaité d'aller encore plus loin dans la réduction de la masse de ces aubes. Les documents FR 3 040 909, WO 2015/099861, EP 1 077 126 et DE 27 56 684 présentent différents exemples d'aubes de soufflante.

Il existe donc un réel besoin pour une préforme fibreuse pour une aube composite ainsi qu'une aube composite formée au moyen d'une telle préforme, un rotor et une machine tournante comprenant une telle aube, qui bénéficient d'une masse encore réduite.

### Exposé de l'invention

Le présent exposé concerne une préforme pour aube composite, obtenue par tissage tridimensionnel, comprenant un premier tronçon longitudinal, configuré pour former un pied d'aube, et un deuxième tronçon longitudinal, s'étendant à partir du premier tronçon longitudinal, configuré pour former une portion d'une partie de pale, dans lequel le premier tronçon longitudinal possède à son extrémité supérieure une première épaisseur et, dans lequel le deuxième tronçon longitudinal comporte au moins une zone de retrait possédant une épaisseur au moins trois fois inférieure à la première épaisseur, la surface totale de la zone de retrait occupant au moins 50% de la surface du deuxième tronçon longitudinal.

Ainsi, la préforme possède un pied structural et une partie de pale munie d'un renfoncement dans la surface latérale de la préforme : il est alors possible de rapporter dans ce renfoncement un matériau possédant une densité encore plus faible que celle de la préforme, afin d'obtenir une aube composite dont la masse est inférieure à celle d'une aube équivalente selon la technique antérieure.

En particulier, les inventeurs ont déterminé que ce type d'aube de grande envergure travaille principalement en flexion, de telle sorte que la peau de l'aube, c'est-à-dire sa partie la plus externe, joue un rôle mécanique beaucoup plus important que son coeur, c'est-à-dire sa partie la plus interne.

Dès lors, une telle préforme permet de conserver une structure tissée 3D, apportant une très bonne tenue mécanique, dans les zones de l'aube les plus chargées mécaniquement : son pied, et au moins une partie de sa peau. A l'inverse, une telle préforme permet de mettre en place un matériau plus léger, généralement moins résistant mécaniquement, dans les zones de l'aube les moins chargées mécaniquement : essentiellement son coeur et une portion minoritaire de sa peau.

Ainsi, il est possible d'obtenir une aube plus légère pratiquement sans affaiblir, en pratique, sa tenue mécanique. Dès lors, il est possible de réaliser des aubes de très grande envergure, permettant de former des rotors de très grands diamètres.

Dans certains modes de réalisation, la zone de retrait possède une épaisseur au moins trois fois inférieure, de préférence au moins cinq fois inférieure, à la première épaisseur. Le renfoncement formé est ainsi de plus grande taille, ce qui permet de réduire d'autant la masse de l'aube finale.

Dans certains modes de réalisation, la zone de retrait possède une épaisseur inférieure à 7,5 mm, de préférence inférieure à 6 mm. Les inventeurs ont en effet déterminé qu'il était possible de réduire l'épaisseur de la peau jusqu'à de telles valeurs tout en conservant une tenue en flexion satisfaisante pour l'aube finale.

Dans certains modes de réalisation, la zone de retrait possède une épaisseur supérieure à 4,5 mm. Les inventeurs ont en effet déterminé qu'une telle épaisseur minimale étant suffisante pour assurer une tenue en flexion satisfaisante pour l'aube finale.

Dans certains modes de réalisation, la première épaisseur est supérieure à 35 mm. Plus préférentiellement encore à 50 mm. Les inventeurs ont en effet déterminé qu'une telle zone de retrait présente un intérêt principalement à partir d'une telle épaisseur.

Dans certains modes de réalisation, la surface totale de la zone de retrait occupe au moins 65%, de préférence au moins 80%, de la surface du deuxième tronçon longitudinal. Le renfoncement formé est ainsi de plus grande taille, ce qui permet de réduire d'autant la masse de l'aube finale.

Dans certains modes de réalisation, l'extrémité inférieure de la zone de retrait se situe à une distance de la jonction entre les premier et deuxième tronçons longitudinaux supérieure à 10%, de préférence supérieure à 15%, de la hauteur du deuxième tronçon longitudinal. Les inventeurs ont en effet déterminé que le comportement fréquentiel de l'aube finale pouvait être dégradé si la zone de retrait se situait trop proche du pied de l'aube.

Dans certains modes de réalisation, la zone de retrait s'étend jusqu'à l'extrémité supérieure du deuxième tronçon longitudinal. En effet, dans certaines des applications envisagées, la tête de l'aube est peu chargée et peut donc supporter une réduction de sa tenue mécanique.

Dans certains modes de réalisation, l'extrémité supérieure de la zone de retrait se situe à une distance de la jonction entre les premier et deuxième tronçons longitudinaux inférieure à 90%, de préférence inférieure à 75%, de la hauteur du deuxième tronçon longitudinal. En effet, dans certaines des applications envisagées, il est préférable de conserver une portion structurale tissée 3D en tête d'aube afin d'y maintenir une tenue mécanique suffisante.

Dans certains modes de réalisation, le deuxième tronçon longitudinal comporte un bord avant, configuré pour former un bord d'attaque de la partie de pale, et un bord arrière, configuré pour former un bord de fuite de la partie de pale.

Dans certains modes de réalisation, l'extrémité avant de la zone de retrait se situe à une distance du bord avant supérieure à 15%, de préférence supérieure à 25%, de la distance séparant le bord avant du bord arrière. En effet, il est préférable de conserver une portion structurale tissée 3D au niveau du bord d'attaque de l'aube afin de pouvoir résister à des chocs contre de potentiels obstacles, en cas d'ingestion d'oiseaux par exemple.

Dans certains modes de réalisation, la zone de retrait s'étend jusqu'au bord arrière. En effet, dans certaines des applications envisagées, le bord de fuite de l'aube est peu chargé et peut donc supporter une réduction de sa tenue mécanique.

Dans certains modes de réalisation, l'extrémité arrière de la zone de retrait se situe à une distance du bord avant inférieure à 95% de la distance séparant le bord avant du bord arrière. En effet, dans certaines des applications envisagées, il est préférable de conserver une portion structurale tissée 3D au niveau du bord de fuite de l'aube afin d'y maintenir une tenue mécanique suffisante.

Dans certains modes de réalisation, le deuxième tronçon longitudinal comporte une zone de transition, prévue entre le premier tronçon longitudinal et la zone de retrait, la zone de transition possédant une épaisseur décroissante en direction de la zone de retrait. Une telle zone de transition permet de réduire progressivement l'épaisseur de la préforme entre le premier tronçon longitudinal, où elle est généralement la plus épaisse, et la zone de retrait : ceci permet une meilleure transmission des efforts entre ces deux zones et simplifie la stratégie de tissage.

Dans certains modes de réalisation, la zone de transition possède un taux de sorties de couches supérieur à 3 sorties de couches par 100 mm, de préférence supérieur à 5 sorties de couches par 100 mm. En effet, un tel taux de sorties de couches permet une transition d'épaisseur suffisamment rapide entre le premier tronçon longitudinal et la zone de retrait.

Dans certains modes de réalisation, la zone de transition possède un taux de sorties de couches inférieur à 7 sorties de couches par 100 mm. Ceci permet de préserver une bonne transmission des efforts à l'interface entre le pied de l'aube et sa pale.

Dans certains modes de réalisation, au moins 75%, de préférence au moins 90%, des sorties de couches au sein de la zone de transition sont réalisées d'un même côté du deuxième tronçon longitudinal. Ceci permet de maintenir une peau structurale tissée 3D en surface d'au moins un côté de l'aube.

Dans certains modes de réalisation, les sorties de couches sont réalisées du côté intrados de la préforme, c'est-à-dire du côté configuré pour former le côté intrados de l'aube. En effet, l'extrados est généralement plus courbé que l'intrados : en conséquence, la peau tissée 3D maintenue du côté extrados est courbée, ce qui précontraint les fibres de cette peau, conduisant à une rigidité en flexion plus importante. Néanmoins, il serait également envisageable de réaliser les sorties de couches du côté extrados de la préforme.

Dans certains modes de réalisation, la zone de retrait comprend des couches de fils provenant de différentes zones du premier tronçon longitudinal dans la direction transversale. Autrement dit, les sorties de couches préservent certaines couches du premier tronçon longitudinal qui sont alors ramenées vers la zone de retrait à l'aide de croisements de couche. Ainsi, la connexion mécanique de la zone de retrait avec le premier tronçon longitudinal est renforcée, ce qui renforce la tenue mécanique de l'aube finale.

Dans certains modes de réalisation, la zone de retrait comprend des couches de fils provenant de toute l'épaisseur du premier tronçon longitudinal. Ainsi, la zone de retrait est connectée mécaniquement à toute l'épaisseur du premier tronçon longitudinal, ce qui permet d'assurer une très bonne tenue mécanique de l'aube finale.

Dans certains modes de réalisation, au moins une couche de fils située en surface de la zone de retrait est également située en surface du premier tronçon longitudinal. De préférence, ceci est vrai pour les deux surfaces latérales de la préforme. Ainsi, on assure une continuité de surface, et donc une tenue mécanique renforcée, entre le premier tronçon longitudinal et la zone de retrait.

Dans certains modes de réalisation, le deuxième tronçon longitudinal est courbé. Comme cela a été expliqué, ceci permet, d'une part, de former la courbure de l'aube finale et, d'autre part, de renforcer la tenue en flexion de l'aube finale.

Dans certains modes de réalisation, la zone de retrait est unique. La préforme comporte ainsi un unique renfoncement. De plus, le deuxième tronçon longitudinal est plein, dépourvu notamment d'une chambre interne.

Dans certains modes de réalisation, les fils utilisés pour le tissage de la préforme sont des fibres de carbone. Il peut toutefois s'agir de n'importe quel autre type de fil, par exemple des fibres de verre ou de kevlar.

Dans certains modes de réalisation, l'armure utilisée pour le tissage tridimensionnel de la préforme peut être du type interlock 3D. Toutefois, le tissage des surfaces externes de la préforme peut être essentiellement bidimensionnel, du type satin par exemple.

Le présent exposé concerne également une aube composite, comprenant une partie principale, réalisée en matériau composite au moyen d'une préforme possédant un premier tronçon longitudinal et un deuxième tronçon longitudinal, le deuxième tronçon longitudinal comportant une zone de retrait formant un renfoncement dans la partie principale, et un bloc de remplissage, rapporté dans le renfoncement de la partie principale et dont la densité est strictement inférieure à celle de la partie principale.

En particulier, la préforme de cette aube peut correspondre à l'un quelconque des modes de réalisation précédent, l'aube bénéficiant ainsi des avantages et effets techniques correspondants mentionnés ci-dessus. De préférence, ladite préforme a été mise en forme dans un moule et noyée dans une matrice.

Dans certains modes de réalisation, la densité du bloc de remplissage est au moins 10 fois inférieure à celle de la partie principale. Ceci permet de réduire d'autant la masse de l'aube.

Dans certains modes de réalisation, le bloc de remplissage est réalisé en mousse, par exemple les polyimides ou les polyméthacrylimides (Rohacell 110XT-HT notamment). Les mousses bénéficient en effet d'une densité réduite.

Dans certains modes de réalisation, l'aube comprend une partie de pale comportant un bord d'attaque, un bord de fuite, un extrados et un intrados,

Dans certains modes de réalisation, l'intégralité de l'extrados est formée par la partie principale. On entend ici viser la structure de l'extrados, sans tenir compte d'éventuels revêtements de surface déposés ou rapportés en surface de l'extrados. Comme cela a été expliqué, ceci permet d'assurer une bonne tenue mécanique en flexion. Toutefois, dans d'autres modes de réalisation, la partie principale pourrait former l'intégralité de l'intrados.

Dans certains modes de réalisation, l'intégralité du bord d'attaque est formée par la partie principale. On entend ici viser la structure du bord d'attaque, sans tenir compte d'éventuels revêtements ou renforts de surface déposés ou rapportés en surface du bord d'attaque. Comme cela a été expliqué, ceci permet d'assurer une bonne tenue mécanique en cas de choc avec un obstacle, par exemple lors de l'ingestion d'un oiseau.

Dans certains modes de réalisation, l'intégralité du bord de fuite est formée par la partie principale. On entend ici viser la structure du bord de fuite, sans tenir compte d'éventuels revêtements ou renforts de surface déposés ou rapportés en surface du bord de fuite. Comme cela a été expliqué, ceci permet d'assurer une bonne tenue mécanique au niveau du bord d'attaque, ce qui peut être souhaité selon l'application visée.

Dans certains modes de réalisation, le bloc de remplissage est collé dans le renfoncement de la partie principale. Il peut toutefois être rapporté à l'aide d'autres techniques, par exemple par injection et/ou moulage.

Dans certains modes de réalisation, au moins un pli textile imprégné est rapporté au moins en partie sur le bloc de remplissage. Il peut s'agir d'un pli unique ou d'une superposition de plis, chaque pli étant de préférence bidimensionnel. De préférence, le ou les plis recouvrent intégralement le bloc de remplissage. Un tel pli permet de protéger le bloc de remplissage et de renforcer sa tenue en fonctionnement.

Dans certains modes de réalisation, un profilé métallique est rapporté sur le bord d'attaque et/ou le bord de fuite. Ceci permet de renforcer ces parties de l'aube contre les chocs notamment.

Dans certains modes de réalisation, un film polymère, par exemple en polyuréthane, est rapporté sur au moins une portion de la partie de pale. Ceci permet de protéger la partie de pale de certaines conditions environnementales.

Dans certains modes de réalisation, la longueur de l'aube est supérieure à 900mm. Encore plus préférentiellement supérieure à 1200mm.

Dans certains modes de réalisation, l'épaisseur maximale au col de l'aube est supérieure à 35 mm. Encore plus préférentiellement supérieure à 50 mm.

Dans certains modes de réalisation, l'aube est une aube de rotor, par exemple du type aube de soufflante ou d'hélice. Il peut toutefois également s'agir d'une aube de stator, par exemple du type redresseur.

Dans certains modes de réalisation, la matrice est de type organique. Il peut notamment s'agir d'une résine époxy.

Le présent exposé concerne également un rotor, comprenant une aube composite selon l'un quelconque des modes de réalisation précédents. Il peut notamment s'agir d'une soufflante, carénée ou non, ou d'une hélice. De préférence, le rotor est configuré pour tourner à des vitesses de rotation telles que la vitesse de l'extrémité des aubes ne dépasse pas celle classiquement connue pour une hélice de turbopropulseur ou une hélice de moteur du type open-rotor.

Le présent exposé concerne également une machine tournante comprenant une aube composite ou un rotor selon l'un quelconque des modes de réalisation précédents.

Dans le présent exposé, les termes « longitudinal », « transversal », « inférieur », « supérieur » et leurs dérivés sont définis par rapport à la direction principale des aubes ; les termes « axial », « radial », « tangentiel », « intérieur », « extérieur » et leurs dérivés sont quant à eux définis par rapport à l'axe principal de la turbomachine ; on entend par « plan axial » un plan passant par l'axe principal de la turbomachine et par « plan radial » un plan perpendiculaire à cet axe principal ; enfin, les termes « amont » et « aval » sont définis par rapport à la circulation de l'air dans la turbomachine.

On entend par « tissage tridimensionnel » une technique de tissage dans laquelle des fils de trame circulent au sein d'une matrice de fils de chaîne de manière à former un réseau tridimensionnel de fils selon une armure tridimensionnelle : toutes les couches de fils d'une telle structure fibreuse sont alors tissées au cours d'une même étape de tissage au sein d'un métier à tisser tridimensionnel.

Dans le présent exposé, sauf mention contraire, les expressions « inférieur » et « supérieur » s'entendent au sens large, c'est-à-dire le sens englobant le cas où les deux valeurs considérées sont égales.

Les caractéristiques et avantages précités, ainsi que d'autres, apparaîtront à la lecture de la description détaillée qui suit, d'exemples de réalisation de la préforme et de l'aube composite proposées. Cette description détaillée fait référence aux dessins annexés.

### Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
[Fig. 1] La figure 1 est un plan en coupe d'une turbomachine selon l'exposé.
[Fig. 2] La figure 2 est une vue de profil d'une aube composite selon un premier exemple.
[Fig. 3] La figure 3 est une vue en coupe de l'aube composite selon le premier exemple.
[Fig. 4] La figure 4 illustre de manière schématique la préforme correspondant à ce premier exemple.
[Fig. 5] La figure 5 est une vue en coupe d'une aube composite selon un deuxième exemple.

### Description des modes de réalisation

Afin de rendre plus concret l'exposé, des exemples de préformes et d'aubes composites sont décrits en détail ci-après, en référence aux dessins annexés. Il est rappelé que l'invention ne se limite pas à ces exemples.

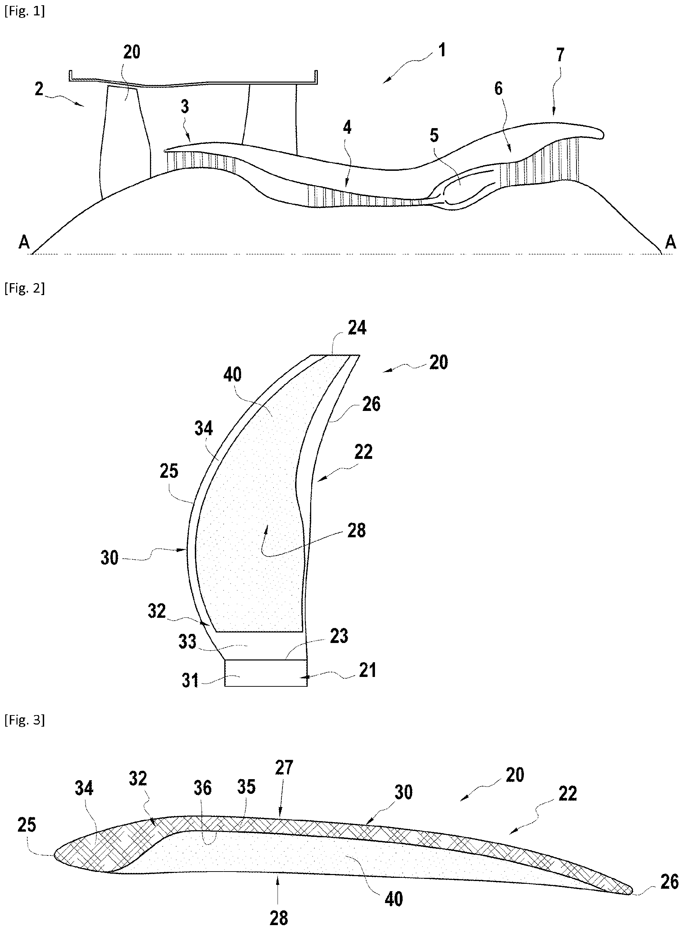

La FIG 1 représente, en coupe selon un plan vertical passant par son axe principal A, un turboréacteur à double flux 1 selon l'exposé. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7.

La soufflante 2 comprend une pluralité d'aube de soufflante 20. Comme cela est représenté sur les FIG 2 et 3, chaque aube de soufflante comprend un pied 21 et une partie de pale 22.

Le pied 21 possède une forme en queue d'aronde lui permettant de s'engager dans l'une des alvéoles d'un disque de soufflante solidaire d'un arbre rotatif de la turbomachine en vue de fixer l'aube de soufflante 20 sur le disque de soufflante. Ainsi, le disque de soufflante et la pluralité d'aube de soufflante 20 forment un rotor entraîné par l'une des turbines 6, 7, en général la turbine basse pression 7.

La partie de pale 22 s'étend pour sa part entre la jonction 23 avec le pied 21 et l'extrémité supérieure 24 de l'aube, également appelée tête d'aube : elle possède un bord d'attaque 25, un bord de fuite 26, un extrados 27, courbé, et un intrados 28, sensiblement moins courbé que l'extrados 27.

Dans le premier exemple, chaque aube de soufflante 20 est formée par une partie principale 30 et un bloc de remplissage 40. La partie principale 30 comporte de manière monobloc un premier tronçon longitudinal 31, formant le pied 21 de l'aube 20, et un deuxième tronçon longitudinal 32 formant une portion uniquement de la partie de pale 22 de l'aube 20.

Plus précisément, ce deuxième tronçon longitudinal 32 possède une première portion massive 33 le long de la jonction 23 entre le pied 21 et la partie de pale 22 de l'aube 20, une deuxième portion massive 34 le long du bord d'attaque 25 de l'aube 20, et une paroi 35, s'étendant depuis la première portion massive 33 jusqu'à la tête 24 de l'aube 20 et depuis la deuxième portion massive 34 jusqu'au bord de fuite 26 de l'aube 20, dont la surface externe forme la surface extrados 27 de l'aube et dont la surface interne forme un renfoncement 36 dans lequel est rapportée le bloc de remplissage 40.

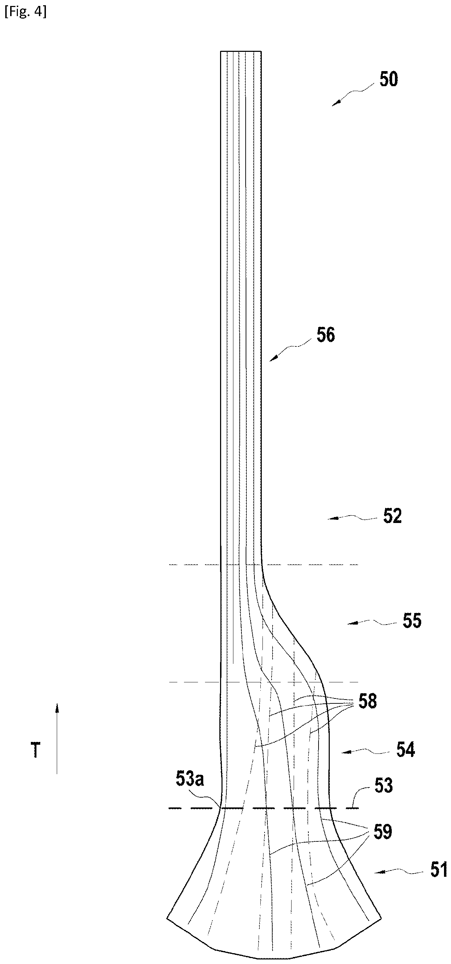

La partie principale 30 est réalisée en matériau composite à partir d'une préforme 50 tissée tridimensionnellement. Cette préforme 50 est représentée schématiquement sur la FIG 4, seuls quelques fils de trame 58, 59 étant représentés. Cette préforme 50 va être décrite d'amont en aval dans la direction T de tissage, c'est-à-dire du bas vers le haut de la FIG 4. Il va toutefois de soi que le tissage pourrait être réalisé à partir de l'autre extrémité et dans l'autre sens.

Dans cet exemple de réalisation, la préforme 50 est tissée tridimensionnellement en fibres de carbone selon une armure interlock 3D. Seules les surfaces de la préforme 50 sont tissées bidimensionnellement selon une armure de type satin.

A l'extrémité amont, le tissage débute la réalisation d'un premier tronçon longitudinal 51 destiné à former le premier tronçon longitudinal 31 de la partie principale 30 de l'aube 20, c'est-à-dire le pied 21 de l'aube 20. Le premier tronçon longitudinal 51 est le tronçon de la préforme 50 possédant le plus de couches de fils liées, et donc l'épaisseur la plus importante. Cette épaisseur diminue progressivement vers l'aval de manière à former une queue d'aronde jusqu'à atteindre un col 53a marquant l'extrémité supérieure du premier tronçon longitudinal 51.

En aval du premier tronçon longitudinal 51, débute alors un deuxième tronçon longitudinal 52, destiné à former le deuxième tronçon longitudinal 32 de la partie principale 30 de l'aube 20, s'étend jusqu'à l'extrémité aval de la préforme 50. La hauteur du deuxième tronçon longitudinal 52 correspond ainsi à la distance séparant la jonction 53 entre les premier et deuxième tronçons longitudinaux 51, 52 et l'extrémité supérieure de la préforme 50.

Dans une première zone 54, ou zone d'échasse, à partir de la jonction 53 entre les premier et deuxième tronçons longitudinaux 51, 52, l'épaisseur de la préforme 50 est maintenue sensiblement constante. Cette zone d'échasse 54 est destinée à former la première portion massive 33 de la partie principale 30.

Puis, dans une deuxième zone 55, ou zone de transition, des sorties de couches sont réalisées progressivement le long du tissage T de manière à réduire progressivement l'épaisseur de la préforme 50 dans cette zone de transition 55. Plus précisément, certaines couches de fils de trame 58 sont sélectionnées et sortis de la préforme 50, progressivement, de l'intrados vers l'extrados, et épargnant régulièrement certaines couches de fils de trame 59 qui sont alors ramenées vers le côté extrados à l'aide de croisements de couches.

Des méthodes de tissage permettant de telles sorties de couches sont désormais bien connues dans le domaine du tissage 3D. Concrètement, les fils de trame concernés 58 sont amenés à laisser libres certains fils de chaîne, appelés « flottés » qui, détachés de tout fil de trame, « flottent » et peuvent ainsi être éliminés ultérieurement par rasage : des couches entières ou partielles peuvent ainsi être éliminées, ce qui permet de réduire l'épaisseur de certaines zones de la préforme.

Des méthodes de tissage permettant de tels croisements de couche sont désormais bien connues dans le domaine du tissage 3D. Dans la zone de croisement de couche, un premier fil de trame donné, solidarisant les fils de chaîne d'une couche donnée, est dévié transversalement afin de solidariser, en aval de la zone de croisement de couche, les fils de chaîne d'un couche voisine, tandis qu'un deuxième fil de trame issu de ladite couche voisine est dévié en sens inverse pour reprendre la couche de fils de chaîne abandonnée par le premier fil de trame. Ainsi, les deux fils de trame se croisent au niveau de la zone de croisement de couche. Les fils de trame peuvent ainsi dévier d'une ou plusieurs couches de fils de trame, seuls ou en groupe, en une fois ou en plusieurs fois.

Enfin, une fois la réduction d'épaisseur souhaitée atteinte, une troisième zone 56, ou zone de retrait, est réalisée jusqu'à l'extrémité aval de la préforme 50, c'est-à-dire son extrémité supérieure. Cette zone de retrait 56 possède une épaisseur bien plus réduite que celle du premier tronçon longitudinal 51 au niveau de sa jonction 53 avec le deuxième tronçon longitudinal 52. Cette zone de retrait 56 est destinée à former le renfoncement 36 de la partie principale 30 de l'aube 20.

A cet égard, on note que la FIG 4 représente la stratégie de tissage de la préforme 50 dans le plan du renfoncement 36 et présente donc une zone de retrait 56 ; toutefois, on comprend naturellement que la préforme 50 est dépourvue d'une telle zone de retrait le long de son bord avant correspondant au bord d'attaque 25 de l'aube 20, c'est-à-dire dans la zone correspondant à la deuxième portion massive 34 de la partie principale 30 de l'aube 20.

Une fois le tissage terminé, les flottés issus des sorties de couche sont rasés. La préforme 50 est ensuite humidifiée pour l'assouplir et permettre un décadrage plus aisé des fibres. Elle est alors introduite dans un moule de formage dont l'espace intérieur est ajusté à la géométrie recherchée pour la préforme 50.

On sèche ensuite la préforme 50 afin que celle-ci se raidisse, bloquant ainsi la géométrie imposée lors de la mise en forme. La préforme 50 est enfin disposée dans un moule d'injection, aux dimensions de la partie principale 30 souhaitée, dans lequel on injecte une matrice, ici une résine époxy. Une telle injection peut par exemple être réalisée par le procédé connu RTM (« resin transfer molding »). A l'issue de cette étape, on obtient alors une partie principale 30 en matériau composite composée d'une préforme 50 tissée en fibres de carbone noyée dans une matrice époxy. Des étapes d'usinage peuvent éventuellement compléter ce procédé pour finaliser la partie principale 30.

Le bloc de remplissage 40 est réalisé pour sa part en mousse, polyimides ou polyméthacrylimides par exemple, usinée aux cotes du renfoncement 36 de la partie principale 30. Le bloc de remplissage 40 est ensuite rapporté par collage au sein du renfoncement 36 de manière à obtenir, après un dernier usinage éventuel, l'aube finale 20.

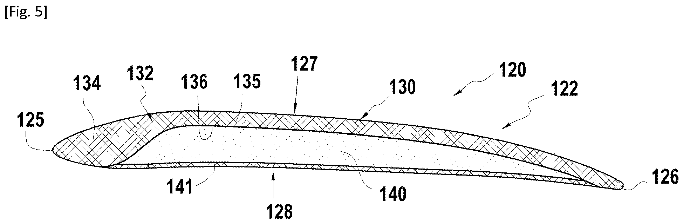

La FIG 5 illustre un deuxième exemple de réalisation d'une aube de soufflante 120 tout à fait analogue au premier exemple, si ce n'est qu'elle comprend en outre un empilement de plis textiles 141 rapporté sur la surface intrados 128 de l'aube 120 de manière à recouvrir intégralement le bloc de remplissage 140.

Ces plis 141, bidimensionnels, sont réalisés de préférence dans le même matériau que la préforme, ici en fibres de carbone. Ils sont pré-imprégnés à l'aide d'une matrice polymérique, de préférence identique à celle imprégnant la préforme, ici une résine époxy.

Ces plis 141 sont rapportés à l'issue de la fabrication de la partie principale 130 de l'aube 120 et après la mise en place du bloc de remplissage 140 au sein du renfoncement 136.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Préforme pour aube composite, obtenue par tissage tridimensionnel, comprenant
un premier tronçon longitudinal (51), configuré pour former un pied d'aube (21), et
un deuxième tronçon longitudinal (52), s'étendant à partir du premier tronçon longitudinal (51), configuré pour former une portion d'une partie de pale (22), dans lequel le premier tronçon longitudinal (51) possède à son extrémité supérieure (53) une première épaisseur et,
dans lequel le deuxième tronçon longitudinal (52) comporte au moins une zone de retrait (56), formant un renfoncement dans la surface latérale de la préforme, possédant une épaisseur au moins trois fois inférieure à la première épaisseur, la surface totale de la zone de retrait (56) occupant au moins 50% de la surface du deuxième tronçon longitudinal (52).

2. Préforme selon la revendication 1, dans laquelle la zone de retrait (56) possède une épaisseur inférieure à 7,5 mm, de préférence inférieure à 6 mm.

3. Préforme selon la revendication 1 ou 2, dans laquelle l*'*extrémité inférieure de la zone de retrait (56) se situe à une distance de la jonction (53) entre les premier et deuxième tronçons longitudinaux (51, 52) supérieure à 10%, de préférence supérieure à 15%, de la hauteur du deuxième tronçon longitudinal (52).

4. Préforme selon l'une quelconque des revendications 1 à 3, dans laquelle le deuxième tronçon longitudinal (52) comporte un bord avant, configuré pour former un bord d'attaque (25) de la partie de pale (22), et un bord arrière, configuré pour former un bord de fuite (26) de la partie de pale (22), et
dans laquelle l*'*extrémité avant de la zone de retrait (56) se situe à une distance du bord avant supérieure à 15%, de préférence supérieure à 25%, de la distance séparant le bord avant du bord arrière.

5. Préforme selon l'une quelconque des revendications 1 à 4, dans laquelle le deuxième tronçon longitudinal (52) comporte une zone de transition (55), prévue entre le premier tronçon longitudinal (51) et la zone de retrait (56), la zone de transition (55) possédant une épaisseur décroissante en direction de la zone de retrait (56), et
dans laquelle la zone de transition (55) possède un taux de sorties de couches supérieur à 3 sorties de couches par 100 mm, de préférence supérieur à 5 sorties de couches par 100 mm.

6. Préforme selon la revendication 5, dans laquelle au moins 75%, de préférence au moins 90%, des sorties de couches au sein de la zone de transition (55) sont réalisées d'un même côté du deuxième tronçon longitudinal (52).

7. Préforme selon l'une quelconque des revendications 1 à 6, dans laquelle la zone de retrait (56) comprend des couches de fils provenant de différentes zones du premier tronçon longitudinal (51) dans la direction transversale.

8. Aube composite, comprenant
une partie principale (30), réalisée en matériau composite au moyen d'une préforme (50) selon l'une quelconque des revendications 1 à 7, la zone de retrait (56) de la préforme (50) formant un renfoncement (36) dans la partie principale (30), et
un bloc de remplissage (40), rapporté dans le renfoncement (36) de la partie principale (30) et dont la densité est strictement inférieure à celle de la partie principale (30).

9. Aube composite selon la revendication 8, dans laquelle le bloc de remplissage (40) est réalisé en mousse, par exemple en polyimide ou en polyméthacrylimide.

10. Aube composite selon la revendication 8 ou 9, dans laquelle au moins un pli textile imprégné (141) est rapporté au moins en partie sur le bloc de remplissage (140).

11. Rotor, comprenant une aube (20) composite selon l'une quelconque des revendications 8 à 10.

12. Machine tournante, comprenant une aube composite (20) selon l'une quelconque des revendications 8 à 10 ou un rotor (2) selon la revendication 11.

## Patentansprüche

1. Vorform für eine Verbundschaufel, die durch dreidimensionales Weben erlangt wird, umfassend
einen ersten Längsabschnitt (51), der dazu ausgestaltet ist, einen Schaufelfuß (21) zu bilden, und
einen zweiten Längsabschnitt (52), der sich von dem ersten Längsabschnitt (51) aus erstreckt und dazu ausgestaltet ist, einen Bereich eines Blattteils (22) zu bilden, in dem der erste Längsabschnitt (51) an seinem oberen Ende (53) eine erste Dicke aufweist,
und
wobei der zweite Längsabschnitt (52) mindestens eine zurückgesetzte Zone (56) beinhaltet, die eine Vertiefung in der Seitenfläche der Vorform bildet und eine Dicke aufweist, die mindestens dreimal kleiner als die erste Dicke ist, wobei die Gesamtfläche der zurückgesetzten Zone (56) mindestens 50 % der Fläche des zweiten Längsabschnitts (52) belegt.

2. Vorform nach Anspruch 1, wobei die zurückgesetzte Zone (56) eine Dicke von weniger als 7,5 mm, bevorzugt weniger als 6 mm, aufweist.

3. Vorform nach Anspruch 1 oder 2, wobei sich das untere Ende der zurückgesetzten Zone (56) in einem Abstand von der Verbindungsstelle (53) zwischen dem ersten und dem zweiten Längsabschnitt (51, 52) von über 10 %, bevorzugt über 15 %, der Höhe des zweiten Längsabschnitts (52) befindet.

4. Vorform nach einem der Ansprüche 1 bis 3, wobei der zweite Längsabschnitt (52) eine Vorderkante, die dazu ausgestaltet ist, eine Anströmkante (25) des Blattteils (22) zu bilden, und eine Hinterkante, die dazu ausgestaltet ist, eine Abströmkante (26) des Blattteils (22) zu bilden, beinhaltet und
wobei sich das vordere Ende der zurückgesetzten Zone (56) in einem Abstand von der Vorderkante von über 15 %, bevorzugt über 25 %, des Abstands befindet, der die Vorderkante von der Hinterkante trennt.

5. Vorform nach einem der Ansprüche 1 bis 4, wobei der zweite Längsabschnitt (52) eine Übergangszone (55) beinhaltet, die zwischen dem ersten Längsabschnitt (51) und der zurückgesetzten Zone (56) vorgesehen ist, wobei die Übergangszone (55) eine Dicke aufweist, die in Richtung der zurückgesetzten Zone (56) abnimmt, und wobei die Übergangszone (55) ein Verhältnis von Schichtausgängen von über 3 Schichtausgängen pro 100 mm, bevorzugt von über 5 Schichtausgängen pro 100 mm, aufweist.

6. Vorform nach Anspruch 5, wobei mindestens 75 %, bevorzugt mindestens 90 %, der Schichtausgänge innerhalb der Übergangszone (55) auf einer selben Seite des zweiten Längsabschnitts (52) hergestellt sind.

7. Vorform nach einem der Ansprüche 1 bis 6, wobei die zurückgesetzte Zone (56) Fadenschichten umfasst, die von unterschiedlichen Zonen des ersten Längsabschnitts (51) in der Querrichtung ausgehen.

8. Verbundschaufel, umfassend
einen Hauptteil (30), der aus einem Verbundmaterial mittels einer Vorform (50) nach einem der Ansprüche 1 bis 7 hergestellt ist, wobei die zurückgesetzte Zone (56) der Vorform (50) eine Vertiefung (36) in dem Hauptteil (30) bildet, und
einen Füllblock (40), der in der Vertiefung (36) des Hauptteils (30) angebracht ist und dessen Dichte streng unter jener des Hauptteils (30) liegt.

9. Verbundschaufel nach Anspruch 8, wobei der Füllblock (40) aus einem Schaumstoff, beispielsweise aus Polyimid oder aus Polymethacrylimid, hergestellt ist.

10. Verbundschaufel nach Anspruch 8 oder 9, wobei mindestens eine imprägnierte Stofflage (141) zumindest teilweise auf dem Füllblock (140) angebracht ist.

11. Rotor, umfassend eine Verbundschaufel (20) nach einem der Ansprüche 8 bis 10.

12. Rotationsmaschine, umfassend eine Verbundschaufel (20) nach einem der Ansprüche 8 bis 10 oder einen Rotor (2) nach Anspruch 11.

## Claims

1. A preform for a composite blade, obtained by three-dimensional weaving, comprising
a first longitudinal section (51), configured to form a blade root (21), and
a second longitudinal section (52), extending from the first longitudinal section (51), configured to form a portion of an airfoil (22),
wherein the first longitudinal section (51) has a first thickness at its upper end (53) and,
wherein the second longitudinal section (52) includes at least one set-back zone (56), forming a recess in the lateral surface of the preform, having a thickness at least three times less than the first thickness, the total surface of the set-back zone (56) occupying at least 50% of the surface of the second longitudinal section (52).

2. The preform according to claim 1, wherein the set-back zone (56) has a thickness less than 7.5 mm, preferably less than 6 mm.

3. The preform according to claim 1 or 2, wherein the lower end of the set-back zone (56) is located at a distance from the junction (53) between the first and second longitudinal sections (51, 52) greater than 10%, preferably greater than 15%, of the height of the second longitudinal section (52).

4. The preform according to any one of claims 1 to 3, wherein the second longitudinal section (52) includes a front edge, configured to form a leading edge (25) of the airfoil (22), and a rear edge, configured to form a trailing edge (26) part of the airfoil (22), and
wherein the front end of the set-back zone (56) is located at a distance from the front edge greater than 15%, preferably greater than 25%, of the distance separating the front edge from the rear edge.

5. The preform according to any one of claims 1 to 4, wherein the second longitudinal section (52) includes a transition zone (55), provided between the first longitudinal section (51) and the set-back zone (56), the transition zone (55) having a thickness decreasing in the direction of the set-back zone (56), and
wherein the transition zone (55) has a layer exit rate greater than 3 layer exits per 100 mm, preferably greater than 5 layer exits per 100 mm.

6. The preform according to claim 5, wherein at least 75%, preferably at least 90%, of the layer exits within the transition zone (55) are made on the same side of the second longitudinal section (52).

7. The preform according to any one of claims 1 to 6, wherein the set-back zone (56) comprises layers of yarns coming from different zones of the first longitudinal section (51) in the transverse direction.

8. A composite blade, comprising
a main part (30), made of composite material by means of a preform (50) according to any one of claims 1 to 7, the set-back zone (56) of the preform (50) forming a recess (36) in the main part (30), and
a filler block (40), attached in the recess (36) of the main part (30) and whose density is strictly lower than that of the main part (30).

9. The composite blade according to claim 8, wherein the filler block (40) is made of foam, for example polyimide or polymethacrylimide.

10. The composite blade according to claim 8 or 9, wherein at least one impregnated textile fold (141) is attached at least in part to the filler block (140).

11. A rotor, comprising a composite blade (20) according to any one of claims 8 to 10.

12. A rotating machine, comprising a composite blade (20) according to any one of claims 8 to 10 or a rotor (2) according to claim 11.
